# EUROPÄISCHE PATENTSCHRIFT

(11) **EP 0 892 764 B1**
(45) Veröffentlichungstag und Bekanntmachung des Hinweises auf die Patenterteilung: **17.04.2002**
(21) Anmeldenummer: 98903994.6
(22) Anmeldetag: 07.01.1998
(51) Int. Cl.: C02F 11/00

(54) **KLÄRSCHLAMMVERERDUNG**
PROCESSING OF SEWAGE SLUDGE INTO HUMUS
TRANSFORMATION DE BOUES DE CURAGE EN HUMUS

(30) Priorität: 10.01.1997 DE 19700434
(43) Veröffentlichungstag der Anmeldung: 27.01.1999
(73) Patentinhaber: Pabsch, Joachim, 31139 Hildesheim (DE)
(72) Erfinder: Pabsch, Joachim, 31139 Hildesheim (DE)
(74) Vertreter: Wördemann, Hermes, Dipl.-Ing.
(86) Internationale Anmeldenummer: DE9800011
(87) Internationale Veröffentlichungsnummer: WO9830505

(56) Entgegenhaltungen:
- DE-A- 4 100 758
- DE-A- 4 142 085
- DE-C- 4 323 610
- DATABASE COMPENDEX ENGINEERING INFORMATION, INC., NEW YORK, NY, US DE MAESENEER JEAN L: "Constructed wetlands for sludge dewatering" XP002070798 & PROCEEDINGS OF THE 1996 5TH INTERNATIONAL CONFERENCE ON WETLAND SYSTEMS FOR WATER POLLUTION CONTROL;VIENNA, AUSTRIA SEP 15-19 1996, Bd. 35, Nr. 5, 15.September 1996, WATER SCI TECHNOL;WATER SCIENCE AND TECHNOLOGY 1997 ELSEVIER SCIENCE LTD, OXFORD, ENGL, Seiten 279-285,
- DATABASE WPI Section Ch, Week 9624 Derwent Publications Ltd., London, GB; Class B07, AN 96-233029 XP002070799 & HU 210 134 B (AQUAPLAN KFT)

## Beschreibung

Die Erfindung betrifft ein Verfahren zur Klärschlammvererdung sowie einen Polder zur Durchführung des Verfahrens.

Es gibt in Teilbereichen der Bevölkerung große Vorbehalte gegen die Verwertung von Klärschlamm als Dünger und Bodenverbesserer. Obwohl versucht wird, durch die Gesetzgebung (Indirekteinleiterverordnung, Klärschlammverordnung und Klärschlammfonds) ausreichend Sicherheit zu geben, wird von Teilen der Bevölkerung eine Schadstoffakkumulation im Boden befürchtet.

Darüber hinaus fällt der Überschußschlamm auf der Abwasserbehandlungsanlage in sehr flüssiger Form (99 % Wasser) an. Um die Transportkosten in Grenzen zu halten, sind kostenaufwendige Entwässerungsverfahren erforderlich.

Bei einem bekannten Verfahren zur Klärschlammvererdung werden Schilfpflanzen (Phragmatis) eingesetzt. Diese sind teurer, da sie in Ballen angezüchtet werden müssen. Außerdem führen die Schilfpflanzen mit ihren kräftigen Halmen und Wurzeln bei einer späteren Verarbeitung des vererdeten Klärschlamms zu einem erhöhten Bearbeitungsaufwand.

Durch die regelmäßige Beschickung mit Klärschlamm bei dem bekannten Verfahren ist der Durchtrocknungsgrad des vererdeten Klärschlamms relativ gering. Da die Schilfpflanzen während des gesamten Beschickungszeitraumes von ca. 10 - 15 Jahren verwendet werden, ist der Prozentsatz der verrotteten Pflanzenanteile im Endprodukt ebenfalls relativ gering.

In DE 43 23 610 wird ein Biopolder (Zwischenlager) zur biologischen Reinigung und/oder Mineralisierung von Böden und Schlämmen sowie zur biologischen Reinigung von Abwasser, die mit organischen und anorganischen Schadstoffen belastet sind, beschrieben. In diesem sind mindestens ein aerober Bereich und ein anaerober Bereich übereinander angeordnet, so daß die im aeroben Bereich nicht beseitigten Schadstoffe durch die Schwerkraft aus dem aeroben Bereich in den anaeroben Bereich gelangen. Hierdurch sind sie aufeinanderfolgend oxidativen und reduzierenden Prozessen unterworfen.

Aus DE 41 42 085 A ist ein Verfahren bekannt, eine Nutzbarmachung wertgebender Bestandteile von Klärschlämmen über Sickerwässer möglich ist sowie Klärschlämme mineralisiert. Mehrere Klärschlammlagen werden in eine Deponie verbracht und mineralisiert. Nach Abschluss des Mineralisierungsvorgangs wird die Oberfläche verdichtet und wie jede andere Regeldeponie rekultiviert.

Aus DATABASE WPI AN 96-233029 XP002070799 & HU-B-210 134 ist bekannt, dass Schlamm, der pharmazeutische Inhaltsstoffe enthält, in Lagen abgelagert wird. Zwischen den einzelnen Lagen wird Flugasche von 10 - 60 cm Stärke eingebracht, die ein Auswaschen der Schadstoffe in den Untergrund verhindert. Gräser werden in die obere Schicht eingepflanzt und zum wachsen 3-6 Monate gelassen.

Der Erfindung liegt die Aufgabe zugrunde, ein Verfahren zur Klärschlammvererdung unter Vermeidung von Chemikalien anzugeben.

Diese Aufgabe wird bei einem Verfahren zur Klärschlammvererdung durch die im kennzeichnenden Teil des Anspruchs 1 angegebenen Merkmale gelöst.

Weiterbildungen und vorteilhafte Ausgestaltungen der Erfindung ergeben sich aus den weiteren Ansprüchen, der Beschreibung und der Zeichnung.

Das erfindungsgemäße Verfahren stellt ein kostengünstiges Entwässerungsverfahren dar, bei dem zusätzlich die Menge gegenüber den mechanischen Entwässerungsverfahren deutlich reduziert wird. Durch die erfindungsgemäße Verwendung von Gräsern wird eine feine und gleichmäßig verteilte Durchwurzelung, eine Anreicherung von Mikroorganismen sowie Verminderung von Schadstoffanteilen wie zum Beispiel PCBs (Polycyclische Biphenole), AOX und PAKs erreicht.

Die überschlammten Gräser verrotten zudem erheblich schneller als es bei der bekannten Vererdung mittels Schilfpfianzen erreicht wird.

Weiterhin hat die Verwendung von Gräsern, die feinwurzelige, schnellwachsende Pflanzen sind, den Vorteil, daß durch die geringe Wachstumshöhe der Pflanzen eine UV Einstrahlung ermöglicht wird, die die im Klärschlamm enthaltenen Salmonellen oder Phtalate (Weichmacher) deutlich reduzieren. Der erzielte Hygienisierungsgrad ist beträchtlich.

Das Endprodukt ist ein trockener, krümeliger dunkelbrauner Boden, der völlig abwassergeruchsfrei ist und sich durch gute physikalische Eigenschaften zur Bodenverbesserung auszeichnet. Vorteilhaft wird zudem eine deutliche Volumenreduzierung erzielt.

Durch die Verwendung von Gräsern können kürzere Zyklen bei der Vererdung von Klärschlamm erreicht werden als sie bei dem bekannten Verfahren mit Schilf möglich sind. Zudem ist das erfindungsgemäße Verfahren deutlich kostengünstiger.

Weiterhin wird bei dem erfindungsgemäßen Verfahren eine bessere Belüftung des Bodens erzielt, die durch die geringe Schichtdicke der einzelnen Befüllungen mit Klärschlamm und der sich daran anschließenden langen Ruhephasen bewirkt wird.

In einer weiteren Ausgestaltung des erfindungsgemäßen Verfahrens werden in weiteren Poldern parallel die aufeinanderfolgenden Verfahrensschritte durchgeführt. Somit lassen sich Beschickungsunterbrechungen vermeiden. Vorzugsweise werden drei Polder verwendet, so daß zum Beispiel Einbringen von flüssigen Klärschlamm in einen ersten Polder parallel zur Trocknung des flüssigen Klärschlamms und Einsaat von Gräsern in einem zweiten Polder und Wachstum der Pflanzen in einem dritten Polder geschehen können.

Zur Reduzierung von Schadstoffanteilen können zusätzlich die Pflanzen gemäht werden. In der Mahd haben sich Schadstoffe aus dem Klärschlamm angesammelt, die durch zum Beispiel Verbrennung konzentriert werden können. Dies führt zu einer erheblichen Reduzierung von zum Beispiel Schwermetallen in dem vererdeten Endprodukt.

Ein für das erfindungsgemäße Verfahren geeigneter Polder zur Durchführung des erfindungsgemäßen Verfahrens besteht aus Seitenwänden und Bodenplatte, die wasserdicht ausgestaltet sind. Über der Bodenplatte ist eine Rohr- oder Flächendränage angeordnet, welche durch eine Kiesschicht mit Abdeckung aus Mineralgemisch oder durchlässigen Betonsteinen schützbar ist. Vorzugsweise ist zum Ableiten von überstauendem Wasser ein mit dem Polder verbundenes Schachtbauwerk mit Absenkschieber vorgesehen. Dränagewasser und/oder Überstauwasser werden einer Abwasserbehandlungsanlage über Rohrleitungen zugeführt.

In einer weiteren Ausgestaltung eines für das erfindungsgemäße Verfahren geeigneten Polders besitzt dieser zum Untergrund und zu den Böschungen eine vorzugsweise Wasser sperrende oder nur schwer Wasser durchlassende Schicht, erstellt zum Beispiel aus Ton oder PE-Folie, und darüber eine Rohr- oder Flächendränage, welche durch eine Kiesschicht mit Abdeckung aus Mineralgemisch oder durchlässigen Betonsteinen geschützt wird. Zum Ableiten von überstauendem Wasser ist jeweils ein Schachtbauwerk mit Absenkschieber angeordnet. Dränagewasser und Überstauwasser werden einer Abwasserbehandlungsanlage über Rohrleitungen zugeführt.

In einer weiteren verfahrenstechnischen Ausweitung der Erfindung wird der Tatsache entgegengwirkt, daß unter bestimmten klimatischen Bedingungen ein belebter Boden bei längerem Luftabschluß den Mikroorganismus-Gehalt und die Krümelstruktur verliert. In dem oben beschriebenen erfindungsgemäßen Verfahren wird nach der Vererdung einer Lage eine neue Schlamm-Wasser-Schicht aufgetragen, so daß die 1. Lage bis zur Antrocknung und Rissebildng der neuen Lage unter Luftabschluß liegt. Dies trifft insbesondere bei länger anhaltenden Feuchtwetterperioden über einem längeren Zeitraum zu.

Um die gute physikalische und biologische Konsitenz der 1. Lage beziehungsweise der zu überflutenden Lage zu erhalten, wird alternative zu der vorgeschlagenen Lösung nach Abschluß des Vererdungsprozesses der 1. Lage beziehungsweise der zu überflutenden Lage diese mit geeigneten Geräten, wie einer Raupe, an die Böschung am Rand des Beckens zu einem Haufen geschoben, so daß bei der nächsten Beschlammung nur ein geringer Teil des vererdeten Substrats in das Wasser eintaucht.

Nachfolgend wird die Erfindung anhand der Zeichnung näher erläutert.

In der Zeichnung zeigen:
- Fig. 1: eine ersten Ausgestaltung eines erfindungsgemäßen Polders
- Fig. 2: eine zweite Ausgestaltung eines erfindungsgemäßen Polders
- Fig. 3: ein Beschickungszyklus
- Fig. 4: eine Polderanordnung
- Fig. 5: ein Schachtbauwerk
- Fig. 6: ein Schachtbauwerk in Draufsicht.

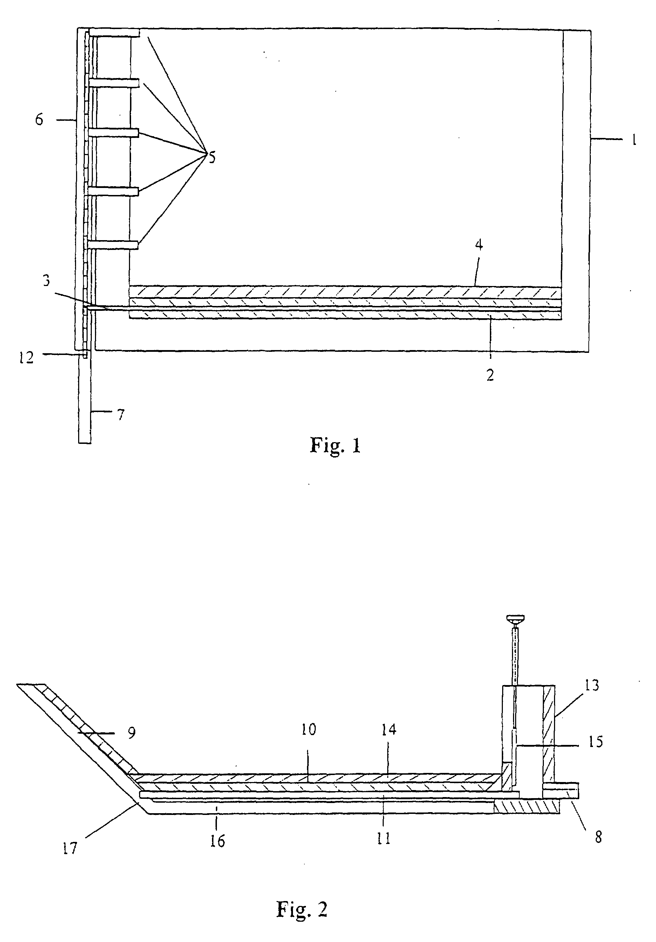

Figur 1 zeigt eine erste Ausgestaltung eines erfindungsgemäßen Polders 1. Der Polder 1 besteht aus zum Beispiel Betonwänden. Die Bodenplatte ist mit einer Rohroder Flächendränage 3 versehen bedeckt von einer Kiesschicht 2 . Die Kiesschicht 2 wird vorzugsweise mit einem Mineralgemisch oder Betonsteinen abgedeckt. An die Wandung des Polders 1 kann ein Schachtbauwerk 6 mit Absenkschieber 12 angebaut sein, der zusätzlich zur Rohr- oder Flächendränage 3 Überstauwasser zum Beispiel einer Abwasserbehandlung zuführen kann. Der Absenkschieber 12 wird in eine Versenkung 7 geführt zur Regulierung von Überstauwasser. Das Schachtbauwerk 6 kann mit der Dränung 3 verbunden sein. Ein Durchbruch 5 in der Wandung des Polders 1 dient dazu, das Überstauwasser dem Schachtbauwerk 6 zuzuführen. Der Durchbruch 5 kann in seiner Höhe durch den Absenkschieber 12 verändert werden.

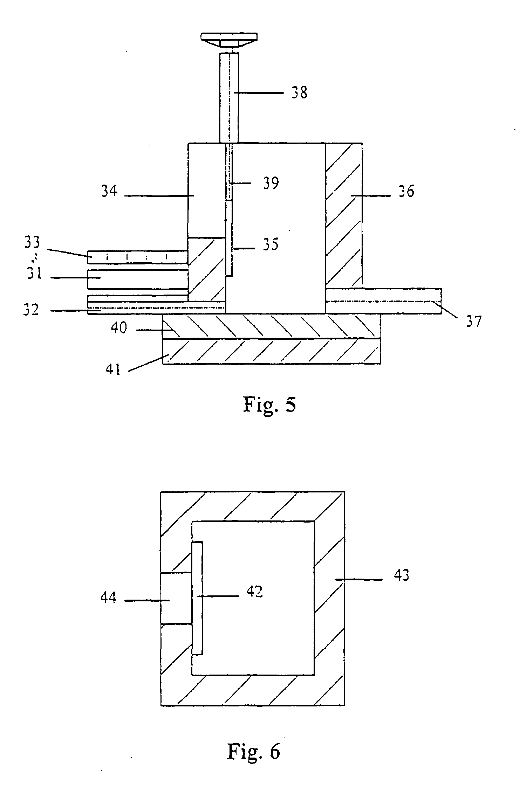

Ein möglicher Aufbau eines Schachtbauwerks 6 gemäß Figur 1 ist in Figur 5 und Figur 6 dargestellt. Das in Figur 5 gezeichnete Schachtbauwerk 36 ruht auf Sockeln 40, 41. Es weist ein Abflußrohr 37 auf, welches vorzugsweise mit einer nachgeschalteten Abwasserbehandlung verbunden ist. Die dem Abflußrohr 37 gegenüberliegende Seite des Schachtbauwerks 36 ist mit dem Innenraum des Polders verbunden. Vom Polder führt insbesondere ein Dränagerohr 32 in das Schachtbauwerk 36. Eine Kiesschicht 31 und eine Abdeckung 33 sind oberhalb des Dränagerohres angeordnet. Das Schachtbauwerk 36 hat zum Polder hin eine Öffnung 34, welche mittels eines Schiebers 35 in seiner Höhe veränderbar ist. Mittels einer Schieberbetätigung 38 kann eine Schieberöffnung verändert werden.

In Figur 6 ist ein Schachtbauwerk 43 in Draufsicht gezeigt. Eine Öffnung 44 kann durch einen Schieber 42 in seiner Größe verändert werden. Das Schachtbauwerk 43 ist vorzugsweise rechteckig aufgebaut.

Figur 2 zeigt eine zweite Ausgestaltung eines erfindungsgemäßen Polders 16.
Bei dieser Ausgestaltung besitzt der Polders 16 zum Untergrund 17 und zu Seitenböschungen 9 eine vorzugsweise Wasser sperrende oder nur schwer Wasser durchlassende Schicht und darüber eine Rohr- oder Flächendränage 11, welche durch eine Kiesschicht 10 mit Abdeckung 14 aus Mineralgemisch oder durchlässigen Betonsteinen geschützt wird. Zum Ableiten von überstauendem Wasser ist jeweils ein Schachtbauwerk 13 mit Absenkschieber 15 angeordnet. Dränagewasser und Überstauwasser können einer Abwasserbehandlungsanlage über Rohrleitungen 8 zugeführt werden.

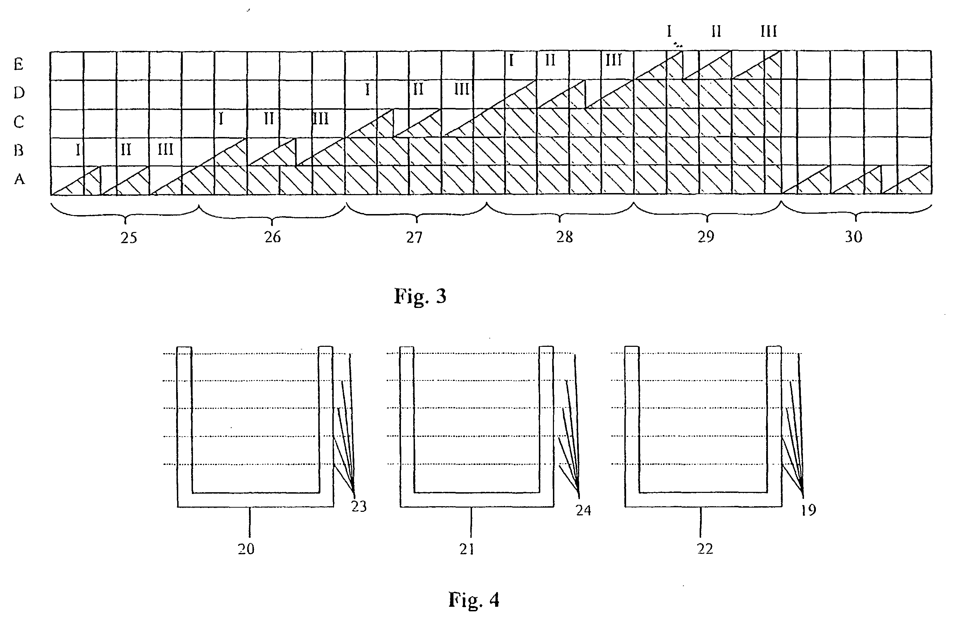

Figur 3 zeigt einen vollständigen Beschickungszyklus 25 bis 30. In einem ersten Zyklus 25 wird ein erster Polder I bis zu einer Höhe A mit Klärschlamm beschickt. In dem Zeitraum, in dem ein zweiter Polder II mit Klärschlamm beschickt wird, wird eine Reduzierung des Wassergehaltes des flüssigen Klärschlamms, vorzugsweise durch Dränung, Verdunstung und / oder Ableitung von Überstauwasser im ersten Polder 1 vorgenommen sowie eine Einsaat von feinwurzeligen, schnellwachsenden Pflanzen, vorzugsweise Weidelgras, mit beginnender Wachsttumsperiode durchgeführt. Nachdem der zweite Polder II mit Klärschlamm beschickt worden ist, wird ein dritter Polder III bis zu der Höhe A mit Klärschlamm beschickt. Im ersten Polder I durchlaufen die Pflanzen eine Wachstumsperiode, während im zweiten Polder II eine Reduzierung des Wassergehaltes vorgenommen sowie eine Einsaat von Pflanzen mit beginnender Wachsttumsperiode vorgenommen wird. Der erste Zyklus ist damit beendet. Für jeden Polder I bis III dauert ein solcher Zyklus ca. 12 Monate. Je nach Gegebenheiten, wie zum Beispiel Witterung kann der Zeitraum eines Zyklus vergrößert oder verkleinert werden. Es schließen sich an den Zyklus 25 weitere Zyklen 26 bis 29 bis zu den jeweiligen Füllstandshöhen B bis E an, bis eine vollständige Beschickung der Polder 1 bis III geschehen ist. Ein maximaler Füllungsgrad E der Polder I bis III ist dann erreicht. Anschließend an den letzten Beschickungszyklus 29 folgt ein weiterer Zyklus 30, der entweder der Lagerung oder der Entleerung und erneuten Beschickung der Polder I bis III dient.

Figur 4 zeigt eine Polderanordnung mit drei Poldern 20 bis 22. Angegeben sind Schichtdicken 22 bis 24, die jedoch mit fortschreitender Vererdung und damit einer erzielten Mengenreduzierung nicht in der dargestellten Höhe ausfallen.

Die Erfindung ist nicht auf die angegebenen Ausführungsbeispiele beschränkt. So wird von der erfindungsgemäßen Lösung die Verwendung von nur einem Polder oder auch mehr als drei Polder abgedeckt. Die beispielsweise beschriebenen Polder sind ebenfalls nicht abschließend beschrieben. Sie können in ihrer Ausgestaltung modifiziert werden, indem zum Beispiel andere Ausgestaltungen der Dränage, der Abdeckung oder des Schachtbauwerkes verwendet oder einzelne Elemente nicht verwendet werden.

## Patentansprüche

1. Verfahren zur Klärschlammvererdung **gekennzeichnet durch** die folgenden Schritte:
a) Einbringen einer ersten Lage von flüssigem Klärschlamm in einen ersten Polder (1; 20; I) bis zu einer ersten Füllstandshöhe (A),
b) Reduzierung des Wassergehaltes des flüssigen Klärschlamms **durch** Dränung, Verdunstung und / oder Ableitung von Überstauwasser,
c) Einsaat von Gräsern, vorzugsweise Weidelgras,
d) Einleitung einer Wachstumsphase der Pflanzen über einen vorgegebenen Zeitraum oder bis zu einem vorgegebenen Wachstumsgrad,
e) Wiederholung der vorhergehenden Verfahrensschritte bis zur vollständigen Befüllung des Polders (1; 20; I),
f) abschließend erneutes Ruhenlassen und danach Leerung des Polders (1, I),
g) zur Vermeidung von Beschickungsunterbrechungen werden in weiteren Poldern (21, 22; II, III) die jeweils um eine Rangfolge versetzten Verfahrensschritte durchgeführt.

2. Verfahren nach Anspruch 1, **dadurch gekennzeichnet, daß** zur Reduzierung von Schadstoffanteilen die Pflanzen gemäht werden und die Mahd gesondert gelagert oder vernichtet wird.

3. Verfahren nach einem der Ansprüche 1 bis 2, **dadurch gekennzeichnet, daß** nach Abschluß des Vererdungsprozesses der ersten Lage beziehungsweise der zu überflutenden Lage diese mit geeigneten Geräten, wie einer Raupe, an eine Böschung am Rand des Polders (1; 20; I) zu einem Haufen geschoben wird, so daß bei der nächsten Einbringung von flüssigem Klärschlamm nur ein geringer Teil des vererdeten Substrats in das Wasser eintaucht.

4. Polder zur Durchführung eines Verfahrens nach einem der Ansprüche 1 bis 3, **dadurch gekennzeichnet, daß** der Polder (1) aus Seitenwänden und Bodenplatte besteht, die wasserdicht ausgestaltet sind, daß über der Bodenplatte eine Rohr- oder Flächendränage (3) angeordnet ist, welche durch eine Kiesschicht (2) mit Abdeckung (4) aus Mineralgemisch oder durchlässigen Betonsteinen schützbar ist, daß zum Ableiten von überstauendem Wasser ein mit dem Polder (1) verbundenes Schachtbauwerk (6), vorzugsweise mit Absenkschieber (12), angeordnet ist und daß zur Abwasserbehandlung des Dränagewassers und/oder Überstauwassers eine Abwasserbehandlungsanlage über Rohrleitungen mit dem Schachtbauwerk (6) und / oder mit der Rohr- oder Flächendränage (3) verbunden ist.

5. Polder zur Durchführung eines Verfahrens nach einem der Ansprüche 1 bis 3, **dadurch gekennzeichnet, daß** Polder (16) zum Untergrund (17) und zu den Böschungen (9) eine vorzugsweise Wasser sperrende oder nur schwer Wasser durchlassende Schicht besitzt, daß über dem Untergrund (17) und/oder zu den Böschungen (9) eine Rohr- oder Flächendränage (11) angeordnet ist, welche durch eine Kiesschicht (10) mit Abdeckung (14) aus Mineralgemisch oder durchlässigen Betonsteinen schützbar ist, daß zum Ableiten von überstauendem Wasser ein mit dem Polder (16) verbundenes Schachtbauwerk (13), vorzugsweise mit Absenkschieber (15), angeordnet ist und daß zur Abwasserbehandlung des Dränagewassers und/oder Überstauwassers eine Abwasserbehandlungsanlage über Rohrleitungen mit dem Schachtbauwerk (6) und / oder mit der Rohr- oder Flächendränage (3) verbunden ist.

## Claims

1. Procedure for the conversion of sewage sludge to humus, **characterized by** the following steps:
a) filling a primary polder (1; 20; I) with liquid sewage sludge up to a primary filling height (A),
b) dehydration of the liquid sewage sludge by drainage, evaporation and/or discharge of the impounding water,
c) seeding of grass, preferably raygras,
d) initiation of a growing phase of the plants for a stated period of time or up to a stated degree of growth,
e) repetition of the preceding steps until the polder is filled completely (1; 20; I),
f) final resting of the polder and then emptying of the polder (1; I),
g) in order to avoid interruption of charging said procedure steps are carried out in additional polders (21, 22; II, III) each step shifted by one sequence.

2. Procedure according to claim 1, **characterized by** that the plants are mowed for a reduction of harmful substances and the mowed grass is stored separately or destroyed.

3. Procedure according to claim 1 or 2, **characterized by** that after completion of the conversion process of the first layer or of the layer to be flooded, respectively, said layer is moved by appropriate tools, e.g. a caterpillar, to a slope at the side of the polder (1; 20; I) to a heap, so that only a small portion of the converted substrate is flooded with water during the next filling period with liquid sewage sludge.

4. Polder to carry out the procedure according to any of the claims 1 to 3, **characterized by** that the polder (1) consists of sidewalls and bottom plate, which are waterproof, that a pipe or surface drainage (3) is installed above the bottom plate that can be protected by a layer of pebbles (2) with a cover (4) of a mixture of minerals or permeable concrete stones, that a sewer building (6), preferably with a gate valve (12), for the discharge of the impounding water is connected with the polder (1), and that for the waste water treatment of the drainage water and/or impounding water a waste water treatment plant is connected over pipes with the sewer building (6) and/or with the pipe or surface drainage (3).

5. Polder to carry out the procedure according to any of the claims 1 to 3, **characterized by** that the polder (16) is equipped preferably with a water blocking or only hardly permeable layer towards the subsoil (17) and the slopes (9), that a pipe or surface drainage (11) is installed above the subsoil (17) and/or towards the slopes (9), which can be protected by a layer of pebbles (10) with a cover of a mixture of minerals (14) or permeable concrete stones, that a sewer building (13), preferably with a gate valve (15), for the discharge of the impounding water is connected with the polder (16), and that for the waste water treatment of the drainage water and/or impounding water a waste water treatment plant is connected over pipes with the sewer building (6) and/or with the pipe or surface drainage (3).

## Revendications

1. Procédé pour la transformation de boues de curage en humus, **caractérisé par** les pas suivants :
a) chargement d'une première couche de boues de curage fluides dans un premier polder (1 ; 20 ; I) jusqu'à une première hauteur de niveau (A),
b) réduction de la teneur en eau de boues de curage fluides par drainage, évaporation et/ou dérivation d'eau surhaussant,
c) ensemencement des graminées, de préférence de ray-grass,
d) initialisation d'une période de croissance des plantes pendant une période prédéterminée ou jusqu'à un degré de croissance prédéterminé,
e) répétition des pas du procédé précédents jusque le remplissage complet du polder (1 ; 20 ; I),
f) finalement faire reposer de nouveau et après cela vidage du polder (1, I),
g) pour éviter des interruptions du chargement les pas du procédé déplacés par une priorité sont exécutés.

2. Procédé selon la revendication 1, **caracterisé en ce que** pour la réduction des substances nuisibles les plantes sont fauchées et que la substance fauchée est stockée ou détruite séparément.

3. Procédé selon l'une quelconque des révendications 1 à 2, **caractérisé en ce que** après la termination du procédé de transformation en humus de la première couche ou de la couche surhaussée celle-ci est poussée à une pile par des instruments propres, par exemple par un train à chenilles, à un talus au bord du polder (1 ; 20 ; I), de sorte que avec le chargement prochain de boues de curage fluides seulement une partie petite du substrat transformé en humus plonge dans l'eau.

4. Polder pour la mise en oeuvre d'un procédé selon l'une des revendications 1 à 3, **caractérisé en ce que** le polder (1) consiste des parois latérales et d'une plaque de base qui sont formées étanche à l'eau, que au-dessus de la plaque de base un drainage par canalisation ou un drainage par surface (3) est placé qui peut être protégé par une couche de gravier (2) avec une couverture (4) d'un mélange minéral ou par des pierres de béton perméables, que pour la dérivation d'eau surhaussant une construction des puits (6) joindrée au polder (1), de préférence avec une vanne d'abaissement (12) et placée et **en ce que** pour le traitement d'eaux usées d'eau de drainage et/ou d'eau surhaussant une installation de traitement d'eaux usées est connectée à la construction des puits (6) et/ou au drainage (3) par canalisation ou par surface.

5. Polder pour la mise en oevre d'un procédé selon l'une des revendications 1 à 3, **caractérisé en ce que** le polder (16) contient une couche quelle, de préférence, est imperméable pour d'eau ou seulment peu perméable pour d'eau en direction du sous-sol (17) et des talus (9), que au-dessus du sous-sol (17) et/ou en direction des talus un drainage (11) par canalisation ou par surface est placé qui peut être protégé par une couche de gravier (10) avec une couverture (14) d'un mélange mineral ou des pierres de béton perméables, que pour la dérivation d'eau surhaussant une construction des puits (13) connectée au polder (16), de préférence avec une vanne d'abaissement (15), est placée et **en ce que** pour le traitement d'eaux usées d'eau de drainage et/ou d'eau surhaussant une installation de traitement pour d'eaux usées est connectée par conduites rigides à la construction des puits (6) et/ou au le drainage (3) par canalisation ou par surface.
